# EUROPEAN PATENT APPLICATION

(11) **EP 1 300 773 A1**
(43) Date of publication of application: **09.04.2003**
(21) Application number: 01123244.4
(22) Date of filing: 02.10.2001
(51) Int. Cl.: G06F 17/30

(54) **Information service using a thesaurus**

(71) Applicant: Sun Microsystems, Inc., Palo Alto, California 94303 (US)
(72) Inventor: Andrae, Joost Reiner, 21107 Hamburg (DE)
(74) Representative: HOFFMANN - EITLE

(57) **Abstract**

Method and system for providing information in a multilingual environment, including receiving a request for information including a character string from a user and selecting based on a user language parameter an index module in a particular language. The request is transmitted to the selected index module and a list of synonyms of the character string received from the user is returned. Based on the list of synonyms a selection index is generated and may be presented to the user. Alternatively, in a multilingual mode, the search request from the user may be transmitted to a plurality of index modules.

## Description

### Field of the Invention

The present application relates to a method and system for providing information.

### Background of the Invention

Data processing devices are used for the widest range of increasingly versatile applications, providing services to sometimes large numbers of different users. Applications range from e.g. editing of text documents or spread sheet applications to complex software systems, e.g. for computer aided design or manufacturing, purchasing, computer aided banking applications and similar. Further, increasingly complex software applications are employed in the field of personal services, for example for personal data organization and mobile communication applications such as mobile telephones or communications services and other services provided over computer networks, such as the Internet.

In any of the above examples, users not fully acquainted with the software application may not be able to make use of the entire range of services provided by the application. Further, during executing the application, problems or faults may occur such as when accessing data, while printing, storing data or similar. Therefore, specialized help applications have been developed for providing a user with information necessary for control or trouble shooting.

Further, more general information providing systems exist, which are adapted to present information on a particular subject to a user, for example over a computer network such as the Internet. Examples here are knowledge databases or the worldwide web.

All of the above applications reach an increasingly large number of users in different regions of the world, potentially speaking different languages. A search request received from a particular user may specify a character string in a particular language related to desired information. However, if information elements maintained by the application are not provided in this particular language, the search request may not always result in an identification of all applicable information elements. For example, a keyword search conducted based on a search string in the German language may not result in an identification of a corresponding information element in the English.

Further, even if the information providing application or help application maintains information elements in the same language as a character string in the search request specifying desired information, the character string may be too specific to be linked with all information elements with a content which is related to the desired information.

### Summary of the Invention

It is therefore desirable to generate a selection index based on a search request having an increased number of elements associated with desired information.

According to an exemplary embodiment, a method for providing information using an information service unit includes receiving a request for information with a first character string associated with requested information; selecting a first index module; transmitting a request associated with the first character string to the first index module, instructing the first index module to return a synonym list with at least one second character string associated with the requested information; and building a selection index based on the synonym list. Accordingly, a search request from a user may be made less precise or fuzzy to obtain a larger selection index based on the search request from the user. The selection index may for example include more keywords or synonyms related to the requested information.

Further, the index module may be a thesaurus including synonyms of the first character string and moreover, the selection of the index module may be based on a user language parameter. Using a thesaurus as index module allows to make use of existing resources of a computer raised application. For example, a text processing application may already include a thesaurus in different languages including language dialects, which can be made use of at the information service unit. Further, the example allows to take into account a user language of a character string of the search request by selecting one of different index modules in different languages based on the user language parameter.

Still further, the first index module may be maintained in association with at least one service application, allowing a shared use of the first index module by the service application and the information service unit.

The information service unit may be constituted by a help application and the selection index may include help topics from which a user may select. Thus, the selection index may include a list of offered help topics in relation to a received search request, including a larger number of offered information elements.

The selection index may be generated at the information service unit by performing a keyword search based on the synonym list and the first character string. Thus, instead of performing a keyword search based on only the character string provided with the search request, the keyword search is based on all entries of the synonym list retrieved from the index module and the first character string of the search request.

The user language parameter may specify a preferred language of a user including a language dialect. Further, an index module may be in a language corresponding to the preferred language, selected as the first index module. The selection step may include selecting at least one second index module in a language different from the preferred language, and the request from the user may be transmitted to the first and at least one second index module. Accordingly, in addition to generating a selection index based on a single index module corresponding to a user language, index modules in further languages may be used for serving the user request, in order to further increase the number of offered information elements with the selection index.

Advantageously, the user language parameter may be derived from a user profile or a user may be prompted to input the user language parameter by specifying a list of at least one preferred language. Thus, the language parameter may either be obtained automatically, or the user may be enabled to input preferred languages. For example, the user could input a single language for generating the selection index or multiple languages, in which case index modules in further languages would be used for generating the selection index.

Still further, a preliminary index may be generated based on the first character sting, the preliminary index including at least one third character string associated with the requested information, and a request associated with the preliminary index may be transmitted to the selected index module. Thus, the number of elements of the selection index can be further increased, as the original search request is already made less precise by generating the preliminary index which is then transmitted to the selected index module.

The selection index and the preliminary index may be generated using the same method. Thus, the further increase of the number of information elements presented in the selection index can be made without additional system requirements.

The information service unit may include a plurality of language specific index tables for generating the selection index, and generating the preliminary index may include selecting a first index table in a language specified by the user parameter. Further, building the preliminary index may include selecting at least one second index table in a language different from the language specified by the user parameter. Accordingly, a further increase of size of the selection index may be achieved.

The information service unit may be arranged at a server unit, and the request for information may be received over a communication link from a client unit. Further, the selection index may be transmitted to the client unit. Accordingly, the method for providing information may be realized by a distributed system, communicating either via dedicated communication links or over computer networks.

The selection index may include links to storage locations storing the requested information. Thus, the selection index may only include identifiers of information elements including the requested information which can then be selected by a user upon need.

The service application may be constituted by at least one of the group consisting of a text processing application; a graphics application; and a spread sheet application.

According to another example, a program may be provided having instructions adapted to carry out the above method example. Further, a computer readable medium may be provided, where the program is to make a computer execute the above method. Still further, a computer program product may be provided comprising the computer readable medium.

According to yet another example, an information service unit may be provided, including a communication unit for receiving a request for information with a first character string associated with requested information; a selection unit for selecting a first index module; and wherein the communication unit may be adapted to transmit a request associated with the first character string to the first index module, instructing the first index module to return a synonym list with at least one second character string associated with the requested information, and wherein the selection unit is adapted to build a selection index based on the at least one second character string.

Further advantageous embodiments of the application are outlined in further dependent claims.

### Brief Description of the Drawings

Throughout the drawings like reference numerals denote like elements.
- Fig. 1: shows a system for providing an information service according to an embodiment of the application;
- Fig. 2: shows operations of a method for providing an information service according to an embodiment of the application;
- Fig. 3: shows operations of a method for providing an information service according to an embodiment of the application, particularly outlining operations for selecting a plurality of index modules;
- Fig. 4: shows operations of a method for providing an information service according to another embodiment of the application, particularly relating to operations for building a preliminary selection index;
- Fig. 5: shows operations for providing an information service according to another embodiment of the application, particularly showing operations for inputting a user language parameter;
- Fig. 6: shows a system for providing an information service according to another embodiment of the application, particularly outlining joint use of index modules by a service application and an information service unit; and
- Fig. 7: shows operations of a method for providing an information service according to another embodiment of the application.

### Detailed Description of the Preferred Embodiments

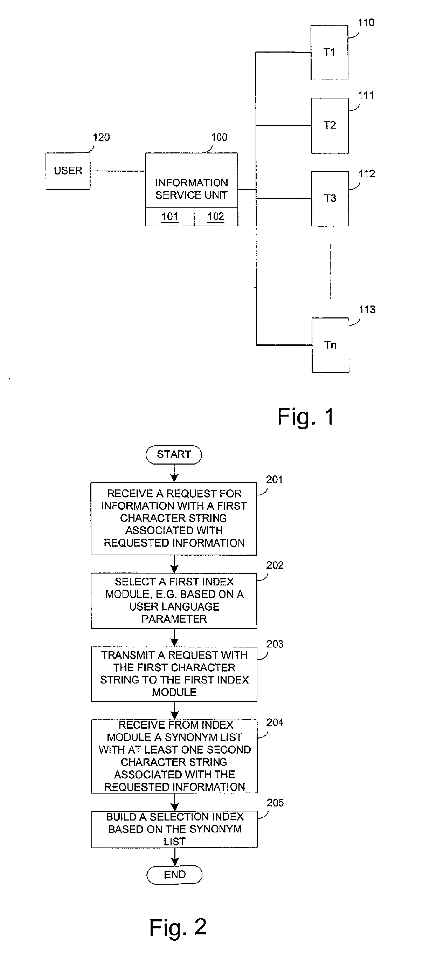

In the following a first embodiment of the application will be described with respect to Fig. 1.

Fig. 1 shows a system for providing an information service according to an embodiment of the application.

Fig. 1 shows an information service unit and a plurality of index modules 110, 111, 112 and 113. Further, a user device 120 is connected to the information service unit.

Further, the information service unit 100 includes a communication unit 101 for receiving a request for information from the user with a first character string associated with requested information. Further, the information service unit includes a selection unit 102 for selecting a first index module of the plurality of index modules 110-113. The communication unit 101 transmits a request associated with the first character string, i.e., the character string of the user request, to the first index module, instructing the first index module to obtain and return a synonym list with at least one second character string associated with the requested information. The selection unit 102 then generates a selection index based on the synonym list and/or the first character string. The selection index can then be presented to the user. If a second character string in association with the requested information cannot be obtained from the selected index module, the selection index can be generated based on the character string received with the search request from the user.

Advantageously, the index modules may be provided in different languages including language dialects and a selection of the first index module may be based on a language parameter associated with the user.

The information service unit 100 including the communication unit and selection unit, the index modules 110-113 and the user device may constitute separate devices or may be integrated into a single computing unit. Communications between the elements of the information service system may be accomplished via internal communication links such as a system bus, or external communication links, including communication networks.

The present embodiment allows to provide a user with an enlarged selection index in response to a search request. Known techniques simply use a character string provided in a user request as a basis for building a selection index. However, as the character string sometimes describes the desired information in a very specific way, the search result may be poor, i.e. the selection index includes only a few hits. As opposed thereto, the present embodiment also uses related character strings provided by at least one index module as a basis for building the selection index. The related character strings may describe different aspects of the desired information or may describe similar topics. Thus the search operation draws on a larger basis and the selection index will include a larger number of hits, i.e. information elements. Essentially, a search request from a user is made less precise, to get an enlarged selection index.

More specifically, as the information service unit obtains second character strings or synonyms to the first character string, i.e. the search string included in the search request from the user, the operation of generating the selection index, e.g. a keyword search in a database, can be improved to achieve a larger number of hits resulting in the enlarged selection index. The second character strings and the first character string can then be processed by the information service unit 100 in a keyword search connected by a Boolean OR command or any other known search combination.

In the following the elements of the information service system shown in Fig. 1 will be outlined in further detail. It is noted that the below description constitutes examples only and should not be construed as limiting the application.

First, the information service unit 100 will be described in further detail.

The information service unit including the communication unit 101 and the selection unit 102 may be constituted by elements of a data processing device, partially realized in hardware and/or software. Further, the information service unit, as the other elements of the system of Fig. 1, may form part of any data processing device such as a general purpose data processing device, a personal or laptop computer, a personal organization unit or a communication unit including a mobile communication unit such as a cellular or any other mobile telephone.

Further, the information service unit may include a help application wherein the selection index includes help topics from which a user may select, in order to retrieve contents of corresponding information elements. For example, the help application could be operated in association with a text processing application, a graphics application, a spread sheet application, a manual application of a mobile computing device including a mobile telephone, a banking application or similar. The help application may be operated independent from an associated service application or may be formed as an integral part of one of the above service applications. Alternatively, the information service unit may include any other information providing application, such as a knowledge data base or may provide access to the worldwide web.

The communication unit 101 preferably forms part of the information service unit 100 and preferably includes the required hardware and software enabling a reception of a search request including at least one character string or any other indication associated with requested information. The search request may include further information on a type of search for information to be performed, e.g. Boolean search with AND/OR connected search terms or similar.

The search request may be received via any kind of communication with a user. For example, the search request could be inputted directly through a keyboard or transmitted from a remote user device, such as the user device 120, to the information service unit, including computer networks. The communication unit then transmits a request associated with the character string received from the user to at least one index module selected by the selection unit. The transmission may again be accomplished via any type of communication between the communication unit and the selected index module, including dedicated communication links or communication networks. Particularly, if the index modules are located remote from the information service unit, a communication via communication networks may be chosen, including packet switched communication networks. The communication unit is preferably able to communicate with a user and an index module through any state of the art communication protocol. In response to the index request, the communication unit receives from the index module a synonym list with at least one second character string associated with the requested information through a communication operation as outlined above.

The communication unit can be adapted to present the selection index to the user, e.g. via a directly connected display device or via a response to the request for information transmitted to a remotely located user device for local processing.

The selection unit 102, preferably forming part of the information service unit 100 may perform a selection of at least one index module of the plurality of index modules 110-113 based on a user language parameter specified by the user, either in the search request, or as obtained from a user profile or from any other source. For example, the index modules could be available in different languages including different language dialects and the user language parameter could specify one of those languages. Thus, the user language parameter could specify one of English, German, Italian, or one of different language dialects, such as US-English, Australian English and similar.

Further, the selection may be based on any other consideration, e.g. requests can be evenly distributed onto index modules, and similar. To facilitate the selection of an index module, a list of index modules and associated languages, inlcuding language dialects, may be accessible from the selection unit. Thus, the selection operation could be constituted by obtaining the language parameter and searching in the list of index modules for an index module being associated with the language corresponding to the language parameter of the user. Alternatively, it is possible that the selection of the index module is performed by polling the number of available index modules in order to obtain information whether a language including dialects corresponding to the user language parameter is supported by the respective index modules.

Then, after receiving the synonym list with the at least one second character string associated with the requested information from the communication unit 101, the selection unit generates a selection index based on the at least one character string of the synonym list. This may be accomplished for example via a keyword search or any other search technique in a database of available information elements. Such a database of available information elements may be maintained at the information service unit 100 or at one or a plurality of remote location, as known in the art. It is possible that the selection unit builds a selection index based on a search operation in a computer network such as the Internet, and retrieves information on desired information from the worldwide web. Still further, the selection index may be generated based on a search in a collection of keywords associated with information elements accessible by the search unit.

The selection unit could also forward the synonym list to further elements (not shown), which then generate a selection index including identifiers of information elements being associated with the requested information.

The selection unit may generate the selection index by performing a keyword search based on the synonym list and/or the first character string. If the synonym list retrieved from the index module is void, i.e., if no synonyms are available in association with the search string included in the search request, the keyword search or any other technique for generating the selection index can be performed based on the character string from the user request only.

As outlined above, the user language parameter may specify a preferred language of a user. This language may for example be retrieved from a user profile, e.g. through the selection unit, or may be specified by the user being prompted to enter a language selection either online or offline. The user language parameter may also be set at an arbitrary point in time. The preferred language may be a mother tongue, such as French, of the user, including any dialects, such as US-English or Australian English, or any other language which is preferred by the user for performing the method of the present example. The index module selected by the selection unit may thus be an index module maintaining a large number of synonyms in a language corresponding to the user preferred language.

In order to further enlarge the selection index, the selection unit may be adapted to select at least one second index module in a language different from the preferred language. This could for example be an index module being maintained in a language corresponding to a further language specified by the user, e.g. at least one second preferred language or may be an index module in a language selected upon further considerations. This could include selecting an index module maintaining a particularly large base of synonyms or could be a language which is widely spoken, such as English, or a language which is widely spoken in a particular region of the world, such as Spanish in Middle and South America. The request from the user can then be transmitted to all of the selected index modules, e.g. through the communication unit. In a multilingual application, the selection unit could select all available index modules for a maximum search result.

It is also possible that index modules available in dialects of the selected language are addressed. I.e. if a user language parameter specifies Bolivean Spanish, not only the corresponding

### Spanish (Bolivean)

index module would be selected but also at least one further of the index modules
Spanish (Chilenean),
Spanish (Argentinean),
Spanish (Columbian),
Spanish (Ecuador), or
Spanish (Venezuela).

This can be implemented as a user option, e.g. an instruction to also use dialects for serving a search request. The option could be specified beforehand, e.g. off-line, or the user could be prompted during serving a search request, e.g. if the number of hits is poor or similar.

Moreover, to still further enlarge the selection index, the selection unit 102 may be adapted to generate a preliminary index of search strings based on the first character string from the user request, the preliminary index including at least one third character string associated with the requested information. Thus, before transmitting the index request to the selected at least one index module, a preliminary index may be generated including an already enlarged number of character strings associated with the desired information.

This could be achieved by performing any search operation including a keyword search as outlined above with regard to generating the selection index. Generating the selection index and the preliminary index may be accomplished using the same method, thus avoiding an increase of complexity of the information service application. Further, the information service unit may include a plurality of language specific index tables for generating the selection index, and generating the preliminary index may include selecting a first index table in a language specified by the language parameter. Thus, generating the preliminary index may make use of existing system resources such as index tables maintained at the information service unit with keywords in particular languages. Moreover, the selection unit may be adapted to select at least one second index table in a language different from the language specified by the user language parameter, similar to the above outlined selection of the index module in a language different from the user language parameter. This could again be a further language input by the user or obtained by other techniques, as outlined above.

The selection index generated by the selection unit preferably includes identifiers of information elements storing the actual information to be presented to the user, e.g. a name, descriptor or similar, and preferably includes links to storage locations storing the associated information elements. The links may be URLs or any other type of link. Thus, a clear and concise selection index can be presented to a user, who may, upon browsing through the selection index, select one or more than one of the presented identifiers of information elements. The selection may be performed by 'clicking' on a particular identifier, or by any other technique for specifying a desired information element.

In the following examples of the index modules 110-113 will be described in further detail.

The index modules, as outlined before, may constitute separate entities connected to the information service unit 100, or may be integrated with the information service unit into a single computing device.

The index modules preferably include collections of synonyms to search terms and allow the retrieval of a list of synonyms in response to a received character string. For example, the index modules may be thesauruses available in many applications such as text processing applications, graphics applications or spread sheet applications or any other information processing applications providing spell checking capabilities. A thesaurus may include a large number of synonyms and/or cross-references associated with a particular search term. The index modules can be organized as databases including links between individual interrelated terms or can be maintained as an index file in a storage unit.

Preferably, the index modules are respectively maintained in a particular language, for example an index module is provided for the English language, German language or any other language. It is also possible that an index module maintains terms in related languages.

While Fig. 1 shows a plurality of individual information modules, the information modules may be integrated into a single device, e.g. a single memory, being partitioned into regions storing terms of the respective index modules. Further, the index modules may include the required intelligence to receive an index request from the information service unit 100 and to perform a search for synonyms regarding a received character string and to return the search result as a synonym list to the information service unit.

In the following an example of the user device 120 is outlined in further detail.

The user device may be constituted by a device allowing interaction with a user, such as a keyboard or any other input device for receiving a search request from the user and may utilize any technique to present a selection index to a user after performing the operations according to the present embodiment. The user device 120 may be integrated into a single unit with the information service unit 100 or may constitute a separate device, such as a general purpose remote data processing unit, including personal computer, a laptop computer, a personal data organizer and a mobile communication unit. Even though only one user device 120 is shown, it is understood that a plurality of user devices or users may access the information service unit.

It is noted that the above elements of the information service system, including the information service unit, the index modules and the user device may be at least partially realized as software and/or hardware. Further, it is noted that a computer-readable medium may be provided having a program embodied thereon, where the program is to make a computer or system of data processing devices execute functions or operations of the features and elements of the above described examples. A computer readable medium can be a magnetic or optical or other tangible medium on which a program is recorded, but can also be a signal, e.g. analog or digital, electromagnetic or optical, in which the program is embodied for transmission. Further, a computer program product may be provided comprising the computer-readable medium.

In the following a further embodiment of the application will be described with respect to Fig. 2.

Fig. 2 shows operations of a method for providing an information service according to another embodiment of the application. The operations shown in Fig. 2 can be carried out using the system shown in Fig. 1, however, Fig. 2 is not limited thereto.

The operations outlined in Fig. 2 allow a user to obtain a larger selection of offered information elements related to desired information specified in a search request. To achieve this the search request provided by the user is rendered less precise using index modules and then a selection index is generated which can be presented to the user.

In a first operation 201 a request for information with a first character string associated with the requested information is received, for example at the information service unit 100 shown in Fig. 1. The request for information may be entered by a user and transmitted to the information service unit as outlined above.

In an operation 202 a first index module of a plurality of index modules is selected. The selection may be based on availability of index modules, work load of index modules or similar. E.g. requests can be evenly distributed onto accessible index modules. Further, a selection of an index module may be based on the user language parameter, i.e. an index module maintaining an index in a language corresponding to a user language can be selected. This may be achieved using the selection unit 102 shown in Fig. 1. User language parameter may be determined from user profiles or may be entered online or offline by the user himself.

In an operation 203 a request with the first character string is transmitted to the selected index module. Upon receiving the request, the index module will perform a search for synonymous terms to the character string included in the search request. The index may include a list of synonymous and/or interlinked terms for a large number of possible search terms.

It is also possible that the index module forwards the request to further entities of the system, i.e. further index modules or any other elements providing further synonymous terms related to the character string provided by the user. It is further noted that the user may provide a plurality of character strings with a single search request, and may further instruct Boolean combinations, i.e. AND/OR of the provided character strings for the search.

In an operation 204 the information service unit receives from the index module a synonym list with at least one second character string associated with the requested information. The synonym list may include the character string originally provided by the user.

After receiving the synonym list, a selection index is generated based on the synonym list in an operation 205. If the synonym list is void, i.e. contains no synonyms related to the at least one character string provided by the user, the selection index may be generated based on the character string provided with the search request only and a respective indication may be provided to the user, allowing the user to modify his search request for improved results.

The example outlined with respect to Fig. 2 may be employed in a help application associated with a service application, the help application providing help information regarding functionality of the service application, which may be a text processing application, a spread sheet application, a graphics application, a manual application of a communication device, a banking application or similar.

Further, the example of Fig. 2 may be employed in any other information providing system such as a knowledge database, including browser applications browsing information on the worldwide web.

The method outlined with respect to Fig. 2 may be realized in a separate system, such as a stand-alone computing device or may be employed in any kind of distributed system such as the Internet.

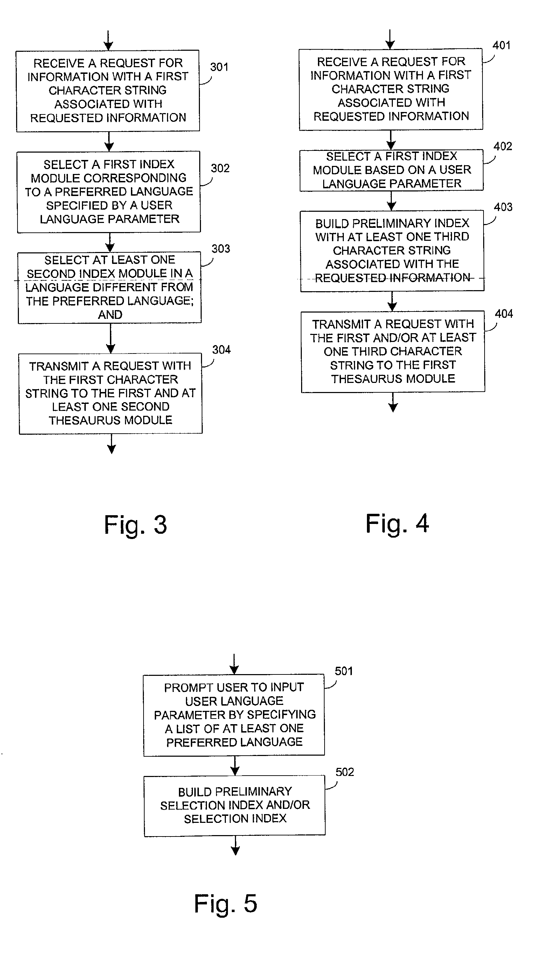

In the following a further embodiment of the application will be described with respect to Fig. 3.

Fig. 3 shows operations of a method for providing an information service according to another embodiment of the application, particularly outlining operations for selecting a plurality of index modules based on a search request from a user. The operations outlined with respect to Fig. 3 may be carried out using the information service unit shown in Fig. 1, however, Fig. 3 is not limited thereto.

The embodiment of Fig. 3 allows to serve a search request from a user in a multilingual mode using at least part of a multilingual help system or information providing system using a plurality of index modules or Thesaurus databases available.

In a first operation 301 a request for information is received from a user, as outlined before, including at least one first character string associated with requested information.

In an operation 302 a first index module is selected corresponding to a preferred language, the language being specified by a user language parameter, e.g. obtained from a user profile or input by the user.

Thereafter, in an operation 303 at least one second index module is selected in a language different from the preferred language specified by the user language parameter. This may, for example, be a second preferred language as specified by the user. At least one second preferred language could be specified by a user, e.g. upon being prompted by the system to input a further language for the search, for example if only few search results can be obtained based on the preferred language. Further, at least one second preferred language could be obtained from a user profile, being specified beforehand by the user or a system administrator. Moreover, selection options can be provided allowing a user to select a number of further languages for the search, e.g. in dependence on a number of search results in the selection index obtained in a previous search operation. Moreover, in a multilingual mode, all available index modules could be selected.

After the selection operations 302 and 303, in an operation 304 a request associated with the first character string, i.e. the character string of the search request from the user, is transmitted to the first and at least one second index module.

Based on the retrieved synonymous terms from the index modules, the selection index is generated, as outlined before.

Alternatively, differing from the sequence of operations outlined with respect to Fig. 3, the request with the first character string could be first transmitted to the first index module corresponding to the preferred language specified by the user language parameter and a synonym list could be obtained from the first index module. Thereafter, based on some or all of the synonyms of the synonym list received from the first index module corresponding to the preferred language, a request could be generated and transmitted to the at least one second index module. Thus, the request transmitted to the at least one second index module could already include a number of synonyms retrieved in the first selection operation involving the first index module.

The embodiment outlined with respect to Fig. 3 allows to further enlarge the search base, by including index modules corresponding to different languages. To fully exploit the capability of this example, a user could already specify search strings associated with the desired information in a plurality of languages, preferably in the languages of the index modules to be selected.

In the following a further embodiment of the application will be described with respect to Fig. 4.

Fig. 4 shows operations of a method for providing an information service according to another embodiment of the application, particularly including building a preliminary selection index to further enlarge a number of search results obtained with a selection index. The operations of Fig. 4 may be carried out using the system of Fig. 1, however, Fig. 4 is not limited thereto.

If a user decides that a number of desired items of a selection index, for example in a help application or any other information providing application should be further enlarged, or, if it is found that a previous selection index contains an unacceptably small number of information elements, a preliminary selection index may be generated at an information service unit before transmitting the terms of this selection index to at least one selected index module. Thus, a preliminary index based on the first character string can be built, including at least one third character string associated with the requested information. A corresponding request associated with the preliminary index can then be transmitted to selected index modules.

Accordingly, the information service unit may include a plurality of language specific index tables for generating the selection index, and generating the preliminary index may include selecting a first index table in a language specified by the user language parameter. Still further, building the preliminary index may include selecting at least one second index table in a language different from the language specified by the user language parameter. Therefore, in order to further increase a number of elements of the selection index, a preliminary index can be generated at the information service unit as outlined above.

More specifically, in a first operation of the embodiment of Fig. 4, operation 401, a request for information is received with a first character string associated with required information. Operation 401 may be as outlined with respect to previous embodiments.

In an operation 402 a first index module is selected based on a user language parameter, for example as outlined before. Then, in an operation 403 a preliminary selection index is generated with at least one third character string associated with the required information. This preliminary selection index may be generated at the information service unit, such as information service unit 100 of Fig. 1. Building the preliminary selection index at the information service unit may be performed using the same method as when building a selection index. Operation 403 serves the purpose of enlarging the search bases already at the information service unit before transmitting a request to the selected index module.

Thereafter, in an operation 404, a request with the first and/or at least one third character string is transmitted to the selected Thesaurus module, i.e., all search strings obtained at the information service unit are transmitted to the selected index module in order to perform a search for synonyms at the index module.

Alternatively, the embodiment of shown in Fig. 4 may be combined with the embodiment shown in Fig. 3, i.e., the example of Fig. 4 may be used in a multilingual environment, wherein a plurality of index modules in a number of different languages is employed.

In the following a further embodiment of the application will be outlined with respect to Fig. 5.

Fig. 5 shows operations for providing an information service according to another embodiment of the application, particularly showing operations enabling a user to input desired languages for performing the search operations.

In a first operation 501 a user is prompted to input a user language parameter by specifying a list of at least one preferred language. This list of languages may be ordered according to preference, i.e. a most preferred language could be placed at a first position in the list of languages. The operation for inputting a user parameter may be performed at an arbitrary point in time, for example during a system set-up, during a log-on operation or similar. Further, it is possible that the user language parameter can be input interactively during executing the information method, e.g. through a pop-up window or selection box presented to the user during executing the application. This may include a selection of languages available at the system, i.e. languages of index modules accessible by an information service unit.

In an operation 502, using the list of at least one preferred language, the preliminary selection index and/or the selection index can be generated, as outlined before.

The embodiment of Fig. 5 gives a user further flexibility in selecting preferred languages in order to further increase a number of possible hits upon searching for information.

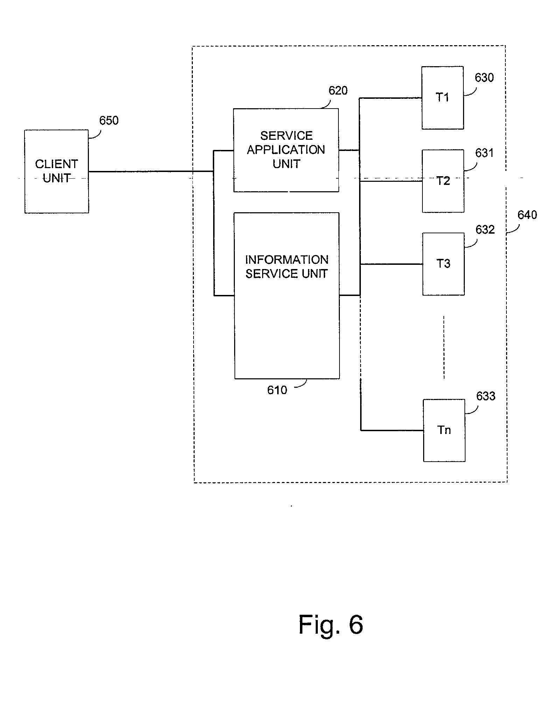

In the following a further embodiment of the application will be described with respect to Fig. 6.

Fig. 6 shows a system for providing an information service according to another embodiment of the application including an information service unit 610, for building a selection index based on a synonym list, as outlined before. Further, Fig. 6 shows a service application unit 620, e.g. executing a service application under control by a user. The service application unit can for example execute a text processing application, graphics application or spread sheet application or any other kind of service application including a manual application of a communication unit or similar. Moreover, Fig. 6 shows index modules 630- 633, preferably constituting index modules associated with different languages, as outlined before.

The information service unit 610, the service application unit 620 and the index modules 630, 631, 632 and 633 may be integrated in a single unit, denoted 640, such as a server unit. However, it is also possible that the above elements are constituted by individual elements connected through communication links, including communication networks. I.e., the elements above may be located at virtually arbitrary locations.

Still further, Fig. 6 shows a client unit 650, e.g. a client computing device such as a personal computer, a laptop computer, a mobile telephone, a personal organizer or any other communication unit. The client unit may be in communication with the server unit 640 either through a dedicated communication link or a communication network, such as a local area network or the Internet. Even though only a single client unit is shown, it is understood that a plurality of client units operated by a plurality of clients may be present and accessing the server 640.

The service application unit, as outlined above, may be execute a multilingual service application, including a plurality of index modules or Thesaurus modules associated with individual languages. This is, for example, known from text processing applications, graphics applications, etc., as outlined above.

The information service unit 610, either forming a stand-alone application or being integrated into the service application, may, according to the present embodiment, be enabled to access the index modules, for obtaining an enlarged basis for information retrieval, as outlined above.

During operation of the system shown in Fig. 6, the service application unit, e.g. being under control by a user operating the client unit, and the information service unit, which may also be under control of the client unit, may both access the index modules for their own purposes, which, in the case of the information service unit is generating a selection index, while it may be a spell-check operation performed by the service application unit. Alternatively, it is also possible that a plurality of service application units accesses the index modules and a plurality of information service units accesses the index modules.

The embodiment of Fig. 6 provides further flexibility and allows a shared use of system resources, by shared use of the index modules. The embodiment shown in Fig. 6 is well suited for an application in a communications network, such as the Internet and/or a local area network serving a potentially very large number of users. For example, a plurality of users could obtain services from the service application unit, e.g. remote text, graphics or spread sheet processing services.

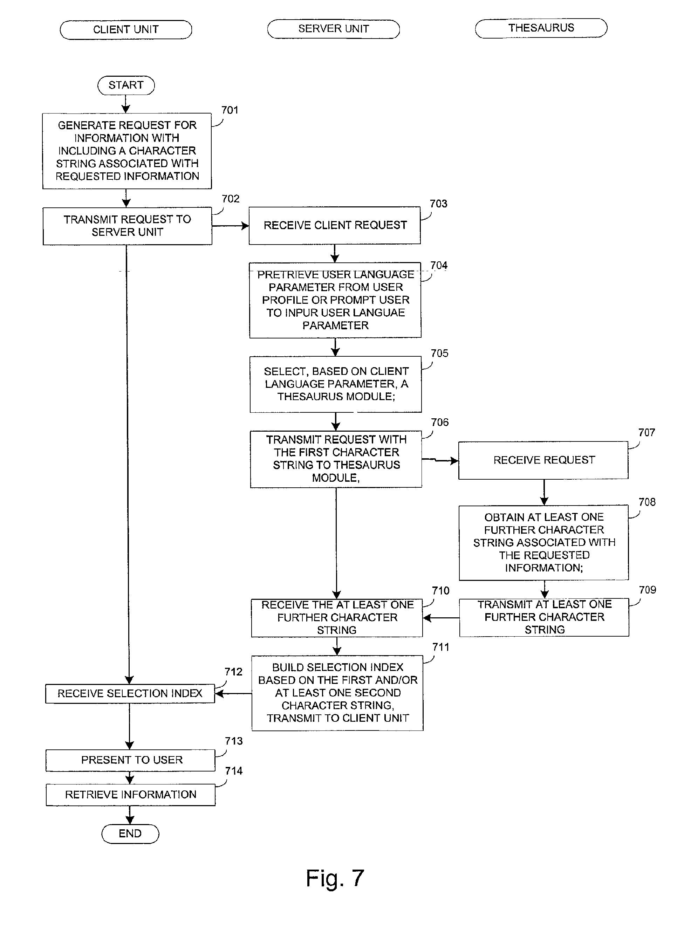

In the following a further embodiment of the application will be described with respect to Fig. 7.

Fig. 7 shows operations of a method for providing an information service according to another embodiment of the application. The operations of Fig. 7 may be executed using the system shown in Fig. 6, however, Fig. 7 is not limited thereto.

Fig. 7 shows operations carried out at a client unit, such as client unit 650 of Fig. 6, a server unit, such as unit 640 of Fig. 6, and a Thesaurus, such as one of the index modules 630-633 of Fig. 6.

In a first operation 701 a request for information is generated at the client unit, including at least one character string associated with requested information. If a plurality of character strings is provided in the request, they may be connected by Boolean operators, as known in the art.

In an operation 702 the request is transmitted to the server unit, where it is received in an operation 703. The transmission may involve any kind of communication network or communication link as outlined before. In an operation 704, at the server unit, a user language parameter is retrieved from a user profile or, alternatively, a user may be prompted to input a language parameter, as outlined before.

In an operation 705 based on the client language parameter, a Thesaurus module is selected, as outlined before. This may involve selecting a single module based on the user language parameter, or a plurality of modules based on multiple languages of the user parameter. Alternatively, in a multilingual mode, all available index modules may be selected.

In an operation 706 a request with the first character string is transmitted to the selected Thesaurus module, i.e. a single or the plurality of selected Thesaurus module. At the Thesaurus module the request is received in an operation 707, and in an operation 708 at least one further character string associated with the requested information is obtained. This may, as outlined before, be synonyms of the at least one character string of the original user request, obtained as outlined before.

In an operation 709 the at least one further character string is transmitted in a synonym list to the server unit, where it is received in an operation 710. Transmissions between the server unit and the Thesaurus may be dedicated communication links or network communications including packet switched connections.

In an operation 711 the selection index is built based on the first and/or at least one second character string and transmitted to the client unit, as outlined before. In an operation 712 the selection index is received at the client unit and presented to the user in an operation 713. This may involve presenting the selection index on a display, e.g., a list of identifiers associated with information elements of the selection index.

The user may then select at lest one of the presented information elements of the selection index and retrieve associated information in an operation 714. This may involve retrieving the information from the server unit, or from any other location, e.g. in a computer network such as the Internet or a local area network.

The above example shows, that the application is well suited for network based implementation, such as in a system for providing remote processing server for users.

While in the above examples of Figs. 2 - 5 and 7 operations are shown in a particular sequence, in other examples this sequence may not necessarily be adhered to.

According to a further example, an information service unit may have the following elements.
1). Information service unit, including
   a code section containing instructions to receive a request for information with a first character string associated with requested information;
   a code section containing instructions to select a first index module; and
   a code section containing instructions to transmit a request associated with the first character string to the first index module, a code section containing instructions to instruct the first index module to return a synonym list with at least one second character string associated with the requested information, and a code section containing instructions to build a selection index based on the at least one second character string.
2). Information service unit according to 1), including a code section containing instructions to generate the selection index at the information service unit by performing a key word search based on the synonym list and the first character string.
3). Information service unit according to 1), wherein
   the user language parameter specifies a preferred language of a user, including dialects; and including
   a code section containing instructions to select an index module in a language corresponding to the preferred language as the first index module;
   a code section containing instructions to select at least one second index module in a language different from the preferred language; and
   a code section containing instructions to transmit the request to the first and at least one second index module.
4). Information service unit according to 1), including a code section containing instructions to derive the user language parameter from a user profile.
5). Information service unit according to 1), including a code section containing instructions to prompt a user to input the user language parameter by specifying a list of at least one preferred language.
6). Information service unit according to 1), including
   a code section containing instructions to generate a preliminary index based on the first character string, the preliminary index including at least one third character string associated with the requested information; and
   a code section containing instructions to transmit a request associated with the preliminary index to the selected index module.
7). Information service unit according to 1), including a code section containing instructions to generate the selection index and the preliminary index using the same method.
8). Information service unit according to 1), comprising a plurality of language specific index tables for generating the selection index, and including a code section containing instructions to select a first index table in a language specified by the user language parameter.
9). Information service unit according to 1), including a code section containing instructions to select at least one second index table in a language different from the language specified by the user language parameter.
It is noted that the above elements of the above examples may be at least partially realized as software and/or hardware. Further, it is noted that a computer-readable medium may be provided having a program embodied thereon, where the program is to make a computer or system of data processing devices execute functions or operations of the features and elements of the above described examples. A computer readable medium can be a magnetic or optical or other tangible medium on which a program is recorded, but can also be a signal, e.g. analog or digital, electromagnetic or optical, in which the program is embodied for transmission. Further, a computer program product may be provided comprising the computer-readable medium.

## Claims

1. Method for providing information using an information service unit, including
receiving a request for information with a first character string associated with requested information;
selecting a first index module;
transmitting a request associated with the first character string to the first index module, instructing the first index module to return a synonym list with at least one second character string associated with the requested information;
building a selection index based on the synonym list.

2. Method according to claim 1, wherein the index module is a thesaurus including synonyms of the first character string and wherein the index module is selected based on a user language parameter.

3. Method according to at least one of the preceding claims, wherein the first index module is maintained in association with at least one service application, allowing a shared use of the first index module by the service application and the information service unit.

4. Method according to at least one of the preceding claims, wherein the information service unit is constituted by a help application, and wherein the selection index includes help topics from which a user may select.

5. Method according to at least one of the preceding claims, including building the selection index at the information service unit by performing a key word search based on the synonym list and the first character string.

6. Method according to at least one of the preceding claims, wherein
the user language parameter specifies a preferred language of a user, including dialects;
an index module in a language corresponding to the preferred language is selected as the first index module;
the selection step includes selecting at least one second index module in a language different from the preferred language; and
transmitting the request to the first and at least one second index module.

7. Method according to at least one of the preceding claims, including deriving the user language parameter from a user profile.

8. Method according to at least one of the preceding claims, including prompting a user to input the user language parameter by specifying a list of at least one preferred language.

9. Method according to at least one of the preceding claims, including
building a preliminary index based on the first character string, the preliminary index including at least one third character string associated with the requested information; and
transmitting a request associated with the preliminary index to the selected index module.

10. Method according to at least one of the preceding claims, including generating the selection index and the preliminary index using the same method.

11. Method according to at least one of the preceding claims, wherein the information service unit includes a plurality of language specific index tables for generating the selection index, and wherein generating the preliminary index includes selecting a first index table in a language specified by the user language parameter.

12. Method according to at least one of the preceding claims, wherein building the preliminary index includes selecting at least one second index table in a language different from the language specified by the user language parameter

13. Method according to at least one of the preceding claims, wherein the information service unit is arranged at a server unit, the request for information is received over a communication link from a client unit, and the selection index is transmitted to the client unit.

14. Method according to at least one of the preceding claims, wherein the selection index includes links to storage locations storing the requested information.

15. Method according to at least one of the preceding claims, wherein the service application is constituted by at least one of the group consisting of:
a text processing application;
a graphics application; and
a spread sheet application.

16. A program having instructions adapted to carry out the method of one of the preceding claims.

17. A computer readable medium, in which a program is embodied, where the program is to make a computer execute the method of one of the claims 1 - 16.

18. A computer program product comprising the computer readable medium according to claim 17.

19. Information service unit, including
a communication unit for receiving a request for information with a first character string associated with requested information;
a selection unit for selecting a first index module; and
wherein the communication unit is adapted to transmit a request associated with the first character string to the first index module, instructing the first index module to return a synonym list with at least one second character string associated with the requested information, and wherein the selection unit is adapted to build a selection index based on the at least one second character string.

20. Information service unit according to claim 19, wherein the index module is a thesaurus including synonyms of the first character string; and the selection unit is adapted to select the first index module based on a user language parameter.

21. Information service unit according to at least one of the claims 19 - 20, wherein the information service unit is constituted by a help application, and wherein the selection index includes help topics from which a user may select.

22. Information service unit according to at least one of the claims 19 - 21, wherein the selection unit is adapted to generate the selection index at the information service unit by performing a key word search based on the synonym list and the first character string.

23. Information service unit according to at least one of the claims 19 - 22, wherein
the user language parameter specifies a preferred language of a user, including dialects;
an index module in a language corresponding to the preferred language is selected as the first index module;
the selection unit is adapted to select at least one second index module in a language different from the preferred language; and
the communication unit is adapted to transmit the request to the first and at least one second index module.

24. Information service unit according to at least one of the claims 19 - 23, wherein the selection unit is adapted to derive the user language parameter from a user profile.

25. Information service unit according to at least one of the claims 19 - 24, wherein the selection unit is adapted to prompt a user to input the user language parameter by specifying a list of at least one preferred language.

26. Information service unit according to at least one of the claims 19 - 25, wherein
the selection unit is adapted to generate a preliminary index based on the first character string, the preliminary index including at least one third character string associated with the requested information; and
the communication unit is adapted to transmit a request associated with the preliminary index to the selected index module.

27. Information service unit according to at least one of the claims 19 - 26, wherein the selection unit is adapted to generate the selection index and the preliminary index using the same method.

28. Information service unit according to at least one of the claims 19 - 27, comprising a plurality of language specific index tables for generating the selection index, and wherein generating the preliminary index includes selecting a first index table in a language specified by the user language parameter.

29. Information service unit according to at least one of the claims 19- 28, wherein the selection unit is adapted to select at least one second index table in a language different from the language specified by the user language parameter

30. Information service unit according to at least one of the claims 19 - 29, wherein the selection index includes links to storage locations storing the requested information.

31. Information service unit according to at least one of the claims 19 - 30, wherein the service application is constituted by at least one of the group consisting of:
a text processing application;
a graphics application; and
a spread sheet application.
